# EUROPÄISCHE PATENTSCHRIFT

(11) **EP 3 916 183 B1**
(45) Veröffentlichungstag und Bekanntmachung des Hinweises auf die Patenterteilung: **25.01.2023**
(21) Anmeldenummer: 20176648.2
(22) Anmeldetag: 26.05.2020
(51) Int. Cl.: E05F 3/10, E05F 3/12

(54) **TÜRBETÄTIGER ZUM ÖFFNEN UND/ODER SCHLIESSEN EINER TÜR**
DOOR ACTUATOR FOR OPENING AND/OR CLOSING A DOOR
COMMANDE DE PORTE PERMETTANT D'OUVRIR ET/OU DE FERMER UNE PORTE

(43) Veröffentlichungstag der Anmeldung: 01.12.2021
(73) Patentinhaber: dormakaba Deutschland GmbH, 58256 Ennepetal (DE)
(72) Erfinder: Hellwig, Alexander, 58256 Ennepetal (DE); Salutzki, Thomas, 58256 Ennepetal (DE); Wiemann, Sabine, 58256 Ennepetal (DE)
(74) Vertreter: Balder IP Law, S.L.

(56) Entgegenhaltungen:
- DE-A1- 4 101 640
- DE-U1-202005 002 474

## Beschreibung

Die Erfindung betrifft einen Türbetätiger zum Öffnen und/oder Schließen einer Tür. Der Türbetätiger ist beispielsweise ein Türschließer oder ein Türantrieb.

Aus dem Stand der Technik sind unterschiedliche Türbetätiger bekannt, die beispielsweise als Türschließer ausgebildet sind. Bei dem Türschließer wird durch manuelles Öffnen der Tür ein Energiespeicher, beispielsweise eine Feder, vorgespannt. Zum Schließen der Tür entspannt sich der Energiespeicher. Allerdings werden auch Türantriebe, die beispielsweise elektromotorisch oder hydraulisch eine Türe öffnen und/oder schließen, als "Türbetätiger" bezeichnet. Bei vielen Türbetätigern werden Fluide, insbesondere Hydrauliköl, verwendet, um Kräfte zu übertragen, sei es zur Ausführung der Öffnungs- oder Schließbewegung oder zur Dämpfung einer Bewegung. Diese Fluide können beispielsweise im Brandfall ein Sicherheitsrisiko darstellen, da sie zumindest bei sehr hohen Temperaturen brennbar sein können DE 41 01 640 A1 offenbart ein Beispiel eines Türbetätigers.

Es ist Aufgabe vorliegender Erfindung, einen Türbetätiger anzugeben, der einen komfortablen und wartungsarmen Betrieb einer Türe ermöglicht und gleichzeitig im Brandfall möglichst sicher ist.

Die Lösung der Aufgabe erfolgt durch die Merkmale des unabhängigen Anspruchs. Die abhängigen Ansprüche haben vorteilhafte Ausgestaltungen der Erfindung zum Gegenstand.

Bei dem erfindungsgemäßen Türbetätiger ist ein Temperatur-Sicherheitskonzept verwirklicht. Dies sorgt bei einem Gebäudebrand dafür, dass der auf der brandabgewandten Seite der Tür montierte Türbetätiger, bei entsprechend starker Erhitzung, durch austretendes Fluid nicht zur Bandbeschleunigung beiträgt. Das Fluid des Türbetätigers soll bei entsprechend hoher Temperatur, insbesondere ca. 115°C, definiert aus dem Inneren des Fluidgehäuses des Türbetätigers austreten, um anderen Bauteilen, welche ab solchen Temperaturen versagen könnten, zuvor zu kommen. Durch den definierten Austritt und geschicktes Leiten kann das Fluid von der heißen Montagefläche, also insbesondere dem Türflügel, weggeleitet werden, um möglichst weit entfernt von der heißen Montagefläche zu Boden zu tropfen.

Der Türbetätiger ist zum Öffnen und/oder Schließen einer Tür ausgebildet. Dabei kann es sich insbesondere um einen Türschließer oder Türantrieb handeln. Der Türbetätiger weist ein Fluidgehäuse mit einem Innenraum auf. Der Innenraum ist zumindest teilweise mit einem Fluid gefüllt. Bei dem Fluid handelt es sich insbesondere um Hydrauliköl. Mit dem Fluid werden im Inneren des Fluidgehäuses Kräfte übertragen, um so insbesondere die Öffnungs- und/oder Schließbewegung der Tür durchzuführen und/oder eine Bewegung der Tür zu dämpfen.

Das "Fluidgehäuse" ist insbesondere ein Metallgehäuse, vorzugsweise hergestellt im Gussverfahren.

In dem Fluidgehäuse können mehrere Kammern für das Fluid und auch mehrere vom Fluid bewegte Kolben vorgesehen sein. Des Weiteren können in dem Fluidgehäuse Fluidkanäle ausgebildet sein, die unterschiedliche Kammern miteinander verbinden. In den Fluidkanälen können sich entsprechende Ventile befinden.

An den beiden Stirnseiten ist das Fluidgehäuse vorzugsweise durch eingeschraubte Verschlussschrauben verschlossen.

Besonders bevorzugt weist der Türbetätiger eine Abtriebswelle auf. Diese Abtriebswelle ist um eine Abtriebsachse drehbar im Fluidgehäuse gelagert.

Zumindest auf einer Seite der Abtriebswelle befindet sich ein Anschluss, beispielsweise ein Vierkant, zum Anschließen eines Gestänges. Über dieses Gestänge erfolgt die Kraftübertragung zwischen Türbetätiger und Türblatt bzw., wenn der Türbetätiger am Türblatt befestigt ist, zwischen Türbetätiger und Zarge.

Besonders bevorzugt ist vorgesehen, dass die Abtriebswelle auf zwei gegenüberliegenden Seiten aus dem Fluidgehäuse ragt und auch an beiden Seiten jeweils einen Anschluss aufweist. Je nach Montageausrichtung kann zum Beispiel einer der beiden Anschlüsse zum Einsatz kommen und wird entsprechend mit dem Gestänge verbunden. Der andere Anschluss bleibt ungenutzt. Für die vorliegende Erfindung ist hierbei möglich, dass aufgrund der beiden gegenüberliegenden Anschlüsse an der Abtriebswelle der Türbetätiger keine definierte Ober- und Unterseite hat, sondern wahlweise mit der einen oder anderen Seite nach oben gerichtet montiert werden kann.

Ferner ist bevorzugt vorgesehen, dass der Türbetätiger im Fluidgehäuse einen linear beweglichen Schließkolben und einen linear beweglichen Dämpfungskolben aufweist. Zwischen den beiden Kolben befindet sich die Abtriebswelle. Die beiden Kolben bewegen sich im Fluidgehäuse senkrecht zur Abtriebsachse. Zur Kraftübertragung zwischen der linearen Bewegung der Kolben und der rotatorischen Bewegung der Abtriebswelle ist vorzugsweise ein Nocken auf der Abtriebswelle angeordnet, wobei auf dem Nocken entsprechende Rollen der Kolben abrollen. Alternativ kann z.B. auch ein Zahnrad an der Abtriebswelle verwendet werden, wobei das Zahnrad in eine mit dem Schließkolben verbundene Zahnstange eingreift.

Der Dämpfungskolben ist mit einer Seite zur Abtriebswelle gerichtet. Auf der gegenüberliegenden Seite befindet sich ein Fluidraum, der wiederum stirnseitig des Fluidgehäuses mit einer Verschlussschraube verschlossen ist. Der Schließkolben ist ebenfalls mit einer Seite der Abtriebswelle zugewandt. An der anderen Seite des Schließkolbens greift vorzugsweise eine Schließfeder an. Die Schließfeder stützt sich an den Schließkolben und die andere Stirnseite des Fluidgehäuses. Diese andere Stirnseite des Fluidgehäuses ist vorzugsweise ebenfalls mit einer Verschlussschraube verschlossen.

In dem Fluidgehäuse ist eine Fluidgehäuseöffnung vorgesehen. Diese Fluidgehäuseöffnung befindet sich insbesondere stirnseitig am Fluidgehäuse. Insbesondere erstreckt sich die Fluidgehäuseöffnung, bei üblicher Einbaulage des Türbetätigers, horizontal, so dass auch das Fluid beim Ausleiten über die Fluidgehäuseöffnung horizontal ausspritzt. Die Fluidgehäuseöffnung befindet sich besonders vorzugsweise in der Verschlussschraube, der sich auf der Seite des Dämpfungskolbens des Türbetätigers befindet.

Die Fluidgehäuseöffnung ist zum Ausleiten des Fluids, also insbesondere des Hydrauliköls, bei thermischer Überbelastung ausgebildet. Hierzu befindet sich in der Fluidgehäuseöffnung ein Ventil, das im normalen Betrieb die Fluidgehäuseöffnung verschließt. Das Ventil ist zum Öffnen thermisch aktivierbar. Wie noch im Detail ausgeführt wird, befindet sich in dem Ventil insbesondere ein Auslöseelement, das bei entsprechender thermischer Belastung zerstört wird, sich deformiert oder schmilzt. Dadurch ist es möglich, dass bei definierter Temperatur das Ventil öffnet. Anzumerken ist, dass es sich hierbei insbesondere um ein Ventil handelt, dass nicht wieder ohne Auswechseln von Teilen geschlossen werden kann.

Bei entsprechender thermischer Belastung öffnet also das thermisch aktivierbare Ventil und das Fluid spritzt seitlich aus dem Fluidgehäuse des Türbetätigers heraus. Üblicherweise ist das Fluidgehäuse des Türbetätigers von einer Verkleidung umgeben. Beispielsweise befindet sich seitlich am Fluidgehäuse eine Endkappe dieser Verkleidung. Ohne weiterer Vorkehrungen würde das Fluid gegen die Endkappe der Verkleidung spritzen und völlig unkontrolliert nach unten laufen bzw. tropfen. Dabei könnte zumindest ein Teil des Fluides an der Montageseite des Türbetätigers ablaufen. Diese Montageseite ist die Seite des Türbetätigers, die an der Montageplatte bzw. wenn keine Montageplatte verwendet wird, direkt am Türblatt oder der Türzarge anliegt. Durch Ablaufen des Fluides an der Montageseite würde sich das Fluid jedoch an der heißen Türe erhitzen und könnte sich entzünden. Um dies zu vermeiden ist außerhalb des Fluidgehäuses, gegenüberliegend zu der Fluidgehäuseöffnung eine Auffangvorrichtung angeordnet.

Diese Auffangvorrichtung bildet einen zur Fluidgehäuseöffnung hin offenen Auffangraum für das Fluid und es ist zumindest eine Ableitöffnung vorgesehen. Über diese Ableitöffnung kann das aufgefangene Fluid aus dem Auffangraum gezielt und an definierter Stelle abgeleitet werden. Das Fluid tropft oder läuft somit aus dieser Ableitöffnung heraus und kann dabei gezielt eben nicht in Richtung der Montageseite, sondern insbesondere in Richtung der gegenüberliegenden Seite geleitet werden. Dadurch kann erreicht werden, dass das Fluid nicht am Türblatt abläuft, sondern unmittelbar auf den Boden tropft, der im Brandfall wesentlich kälter ist als das Türblatt. Dabei ist stets zu beachten, dass davon ausgegangen wird, dass sich der Türbetätiger auf der brandabgewandten Seite der Türe befindet.

Der Türbetätiger kann mit seiner Montageseite unmittelbar an dem Türblatt oder der Zarge befestigt werden. Vorzugsweise umfasst der Türbetätiger jedoch eine Montageplatte. Dabei wird die Montageplatte an dem Türblatt oder der Zarge befestigt. Der Türbetätiger wiederum wird an der Montageplatte befestigt. Die Auffangvorrichtung ist vorzugsweise eine eigenständige Baugruppe, die am Fluidgehäuse und/oder der Montageplatte montierbar und auch wieder zerstörungsfrei demontierbar ist. Dabei kann auch eine Variante gewählt werden, bei der manche Bauteile der Auffangvorrichtung an der Montageplatte und andere Bauteile der Auffangvorrichtung an dem Fluidgehäuse befestigbar sind.

Vorzugsweise ist die gesamte Auffangvorrichtung montierbar und wieder demontierbar. Alternativ ist auch bevorzugt vorgesehen, dass zumindest ein Bauteil der Auffangvorrichtung mit dem Fluidgehäuse oder der Montageplatte fest verbunden ist oder integral ausgebildet ist.

Bevorzugt ist vorgesehen, dass die Auffangvorrichtung eine Spritzwand umfasst. Die Spritzwand liegt der Fluidgehäuseöffnung gegenüber und ist zum Auffangen des ausgeleiteten Fluids in der Auffangvorrichtung angeordnet. Insbesondere bildet die Spritzwand eine Seite des Auffangraums.

Am unteren Ende der Spritzwand umfasst die Auffangvorrichtung vorzugsweise eine geneigte Ableitfläche. Das auf die Spritzwand auftreffende Fluid läuft entlang der Spritzwand nach unten und trifft auf die geneigte Ableitfläche. Die geneigte Ableitfläche leitet mit ihrer Neigung das Fluid in Richtung der zugehörigen Fluidgehäuseöffnung.

Wie bereits aufgeführt, ist bevorzugt vorgesehen, dass, je nach Montageausrichtung des Türbetätigers, zwei unterschiedliche Seiten des Türbetätigers die Oberseite bilden können. Dementsprechend ist bevorzugt vorgesehen, dass die Auffangvorrichtung zwei gegenüberliegende, geneigte Ableitflächen für das Fluid umfasst. Je nach Montageausrichtung des Türbetätigers liegt eine der beiden Ableitflächen am unteren Ende und die andere Ableitfläche ungenutzt am oberen Ende der Spritzwand.

Um das Fluid möglichst gezielt bis zur Fluidgehäuseöffnung zu leiten ist bevorzugt vorgesehen, dass die Auffangvorrichtung zumindest eine geneigte Zusatz-Ableitfläche für das Fluid umfasst. Die Zusatz-Ableitfläche ist so angeordnet, dass das Fluid von der Spritzwand über die geneigte Ableitfläche auf die Zusatz-Ableitfläche fließt. Auf der Zusatz-Ableitfläche fließt das Fluid zur Ableitöffnung hin.

Besonders bevorzugt ist vorgesehen, dass die Auffangvorrichtung zwei gegenüberliegende geneigte Zusatz-Ableitflächen umfasst, wobei je nach Montageausrichtung des Türbetätigers eine der beiden Zusatz-Ableitflächen niedriger als die unten liegende Ableitfläche und die andere Zusatz-Ableitfläche ungenutzt oben liegt.

Die zumindest eine Ableitöffnung befindet sich vorzugsweise an einer der Montageseite des Türbetätigers abgewandten Seite der Auffangvorrichtung. Insbesondere ist vorgesehen, dass die zumindest eine Ableitöffnung unmittelbar in die Umgebung führt bzw. sich unmittelbar in die Umgebung öffnet, so dass aus der Ableitöffnung austretendes Fluid ungeführt nach unten tropft. Dadurch ergibt sich ein gefälliges optisches Bild, da der Türbetätiger lediglich die relativ kleine Ableitöffnung aufweist, die mehr oder weniger nicht zu sehen ist. Es gibt außerhalb dieser Ableitöffnung vorzugsweise keine sonstigen Bauteile, um das Fluid zu führen.

Des Weiteren ist bevorzugt vorgesehen, dass die Auffangvorrichtung zumindest zwei gegenüberliegende Ableitöffnungen für das Fluid umfasst, wobei je nach Montageausrichtung des Türbetätigers eine der Ableitöffnungen am unteren Rand und die andere Ableitöffnung ungenutzt am oberen Rand der Auffangvorrichtung liegt.

Des Weiteren ist bevorzugt vorgesehen, dass die Auffangvorrichtung ein Plattenbauteil umfasst. Dieses Plattenbauteil bildet die Spritzwand. Vorzugsweise ist das Plattenbauteil am Fluidgehäuse oder einer Montageplatte des Türbetätigers angeordnet. Das Plattenbauteil kann an dem Fluidgehäuse bzw. der Montageplatte befestigt sein, beispielsweise angeschraubt. Allerdings ist es auch möglich, dass das Plattenbauteil integraler Bestandteil des Fluidgehäuses oder der Montageplatte ist.

Des Weiteren ist bevorzugt vorgesehen, dass die Auffangvorrichtung ein Auffanggehäusebauteil umfasst. Das Auffanggehäusebauteil weist die zumindest eine Ableitöffnung auf. Bei Verwendung mehrerer Ableitöffnungen sind vorzugsweise alle Ableitöffnungen am Auffanggehäusebauteile ausgebildet. Das Auffanggehäusebauteil ist vorzugsweise am Plattenbauteil montierbar. Besonders bevorzugt ist vorgesehen, dass das Auffanggehäusebauteil auf das Plattenbauteil und/oder die Verschlussschraube aufsteckbar ist.

Ferner kann vorgesehen sein, dass das Auffanggehäusebauteil einstückig mit dem Plattenbauteil ausgebildet ist, wobei vorzugsweise das Auffanggehäusebauteil an der Verschlussschraube montierbar, insbesondere aufsteckbar ist.

Der Türbetätiger umfasst vorzugsweise eine Verkleidung, die das Fluidgehäuse des Türbetätigers abdeckt. Insbesondere ist zumindest ein Bereich der Auffangvorrichtung durch eine stirnseitige Endkappe dieser Verkleidung gebildet. Besonders bevorzugt ist das Auffanggehäusebauteil der Auffangvorrichtung durch die Endkappe der Verkleidung gebildet.

Die Verkleidung umfasst vorzugsweise eine Hauptverkleidung, die das Fluidgehäuse über seine ganze Länge abdeckt. Diese Hauptverkleidung kann beispielsweise einen U-förmigen Querschnitt aufweisen. Beidseitig der Hauptverkleidung werden die beiden stirnseitigen Endkappen angeordnet. Die Endkappe ist vorzugsweise aus Kunststoff gebildet, wobei ein Material verwendet wird, das den hier auftretenden Temperaturen des Fluides standhält. Besonders bevorzugt weist das Auffanggehäusebauteil, insbesondere ausgebildet als Endkappe, eine Innenwand und eine gegenüberliegende Außenwand auf. Außenwand und Innenwand stehen insbesondere parallel zueinander und sind an zumindest drei Seiten durch Seitenwände des Auffanggehäusebauteils verbunden. Die Außenwand und die drei Seitenwände bilden den sichtbaren Bereich der Endkappe. Zur Montageseite hin ist das Auffanggehäusebauteil vorzugsweise offen, so dass es auf das Plattenbauteil und/oder die Verschlussschraube aufsteckbar ist. Dabei erstreckt sich dann das Plattenbauteil in dem Bereich zwischen Innenwand und Außenwand des Auffanggehäusebauteils. Die Innenwand des Auffanggehäusebauteils ist vorzugsweise offen, so dass durch die Innenwand hindurch das Fluid einspritzen kann.

Die Spritzwand ist vorzugsweise durch das Plattenbauteil gebildet. Alternativ kann aber auch die Innenseite der Außenwand des Auffanggehäusebauteils die Spritzwand bilden.

Die oben erwähnte geneigte Ableitfläche bzw. die beiden gegenüberliegenden geneigten Ableitflächen sind vorzugsweise Bestandteil des Plattenbauteils. Die zumindest eine optionale Zusatz-Ableitfläche ist vorzugsweise im Auffanggehäusebauteil ausgebildet.

Das die Fluidgehäuseöffnung verschließende Ventil umfasst vorzugsweise einen Ventilkörper und eine Ventilverschlussschraube. Der Ventilkörper sitzt in der Fluidgehäuseöffnung in einem entsprechenden Ventilsitz. Bei entsprechend hohem Fluiddruck wird durch das Fluid der Ventilkörper nach außen gedrückt, so dass er sich aus seinem Ventilsitz löst. Die Ventilverschlussschraube ist in die Fluidgehäuseöffnung eingeschraubt. Zwischen der Ventilverschlussschraube und dem Ventilkörper befindet sich das Auslöseelement. Das Auslöseelement ist vorzugsweise zwischen Ventilverschlussschraube und Ventilkörper eingeklemmt, so dass das Auslöseelement den Ventilkörper in seinem Ventilsitz hält.

Das Auslöseelement ist zum Öffnen des Ventils durch thermische Einwirkung zerstörbar und/oder deformierbar und/oder schmelzbar. Beispielsweise handelt es sich bei dem Auslöseelement um eine Thermo-Glasampulle wie sie aus Sprinkleranlagen beispielsweise bekannt ist. Die Thermo-Glasampulle ist mit einem Medium gefüllt, das bei entsprechend hoher Temperatur die Ampulle zum Bersten bringt. Dadurch wird das als Thermo-Glasampulle ausgebildete Auslöseelement zerstört, wodurch wiederum die Abstützung des Ventilkörpers gegenüber der Ventilverschlussschraube entfällt. Bei entsprechend hohem Druck des Fluides gibt der Ventilkörper die Fluidgehäuseöffnung frei.

Ferner ist vorgesehen, dass das Auslöseelement beispielsweise aus Kunststoff besteht, der bei der gewünschten Temperatur schmilzt oder deformiert. Als weitere Alternative für das Auslöseelement ist beispielsweise ein Bauteil aus einer Lot-Legierung vorgesehen.

Die Ventilverschlussschraube ist vorzugsweise fluiddurchlässig. Insbesondere weist die Ventilverschlussschraube zumindest ein Loch auf, so dass bei Öffnen des Ventils die Ventilverschlussschraube an Ort und Stelle bleibt aber das Fluid durch die Ventilverschlussschraube hindurchfließen kann. Alternativ kann auch ein Kanal vorgesehen sein, der das Fluid an der Ventilverschlussschraube vorbeileitet.

Die Erfindung wird nun anhand eines Ausführungsbeispiels näher beschrieben. Dabei zeigen:
- Fig. 1: einen erfindungsgemäßen Türbetätiger gemäß einem Ausführungsbeispiel,
- Fig. 2: wesentliche Bauteile im Inneren des erfindungsgemäßen Türbetätigers gemäß dem Ausführungsbeispiel,
- Fig. 3: eine Schnittansicht im Bereich einer Verschlussschraube des erfindungsgemäßen Türbetätigers gemäß dem Ausführungsbeispiel,
- Fig. 4: eine Auffangvorrichtung des erfindungsgemäßen Türbetätigers gemäß dem Ausführungsbeispiel,
- Fig. 5: eine erste Schnittansicht der Auffangvorrichtung aus Fig. 4, und
- Fig. 6: eine zweite Schnittansicht der Auffangvorrichtung aus Fig. 4.

Im Folgenden wird ein Türbetätiger 1, ausgebildet als Türschließer, im Detail erläutert. Soweit nichts anderes erwähnt wird, wird dabei stets auf alle Figuren Bezug genommen.

Der Türbetätiger 1 weist ein Fluidgehäuse 3 auf. Das Fluidgehäuse 3 ist hier ein Gussbauteil aus Metall. Über eine Montageplatte 4 des Türbetätigers 1 kann das Fluidgehäuse 3 an einem Türblatt oder einer Zarge einer Türe befestigt werden. Die Befestigungsseite wird auch als Montageseite 2 bezeichnet.

Ferner umfasst der Türbetätiger 1 eine Verkleidung 5. Die Verkleidung 5 umfasst eine Hauptverkleidung 6, die das Fluidgehäuse 3 auf drei Seiten abdeckt. Stirnseitig umfasst die Verkleidung 5 zwei Endkappen 7 zum Abdecken der beiden Stirnseiten des Fluidgehäuses 3.

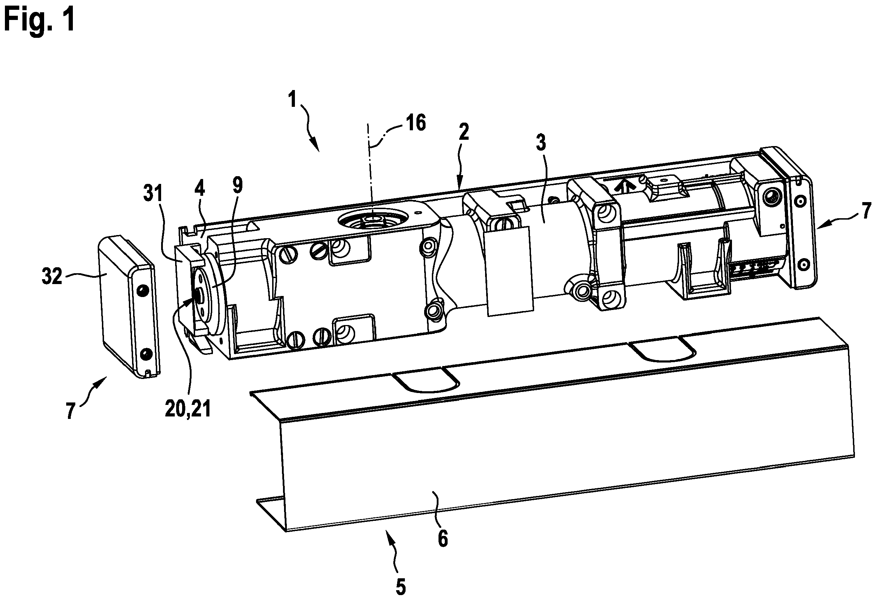

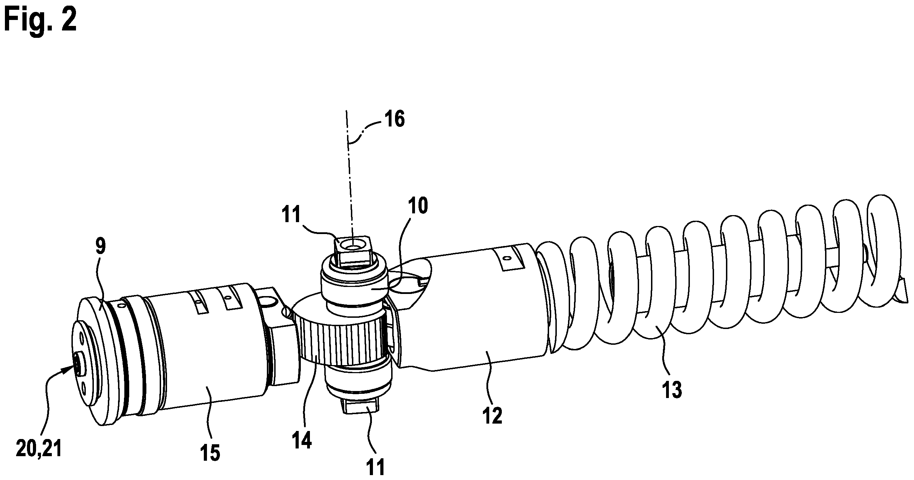

Wie insbesondere die Zusammenschau der Figuren 1 und 2 verdeutlicht, umfasst der Türbetätiger 1 eine Abtriebswelle 10, die im Fluidgehäuse 3 drehbeweglich gelagert ist. Die Drehbewegung erfolgt dabei um eine Abtriebsachse 16. Bei üblicher Verwendung des Türbetätigers 1 steht diese Abtriebsachse 16 senkrecht.

Im gezeigten Beispiel weist die Abtriebswelle 10 beidseitig einen Anschluss, ausgebildet als Vierkant, auf. Der Türbetätiger 1 kann in zwei Montageausrichtungen montiert werden, so dass wahlweise der eine oder andere Anschluss 11 nach oben ausgerichtet ist.

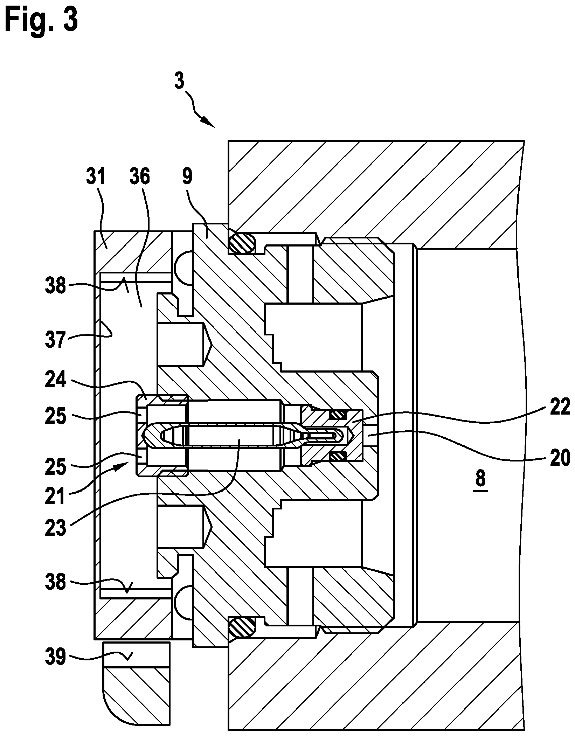

Das Fluidgehäuse 3 bildet einen Innenraum 8 (siehe Fig. 3), der in einzelne Fluidräume unterteilt sein kann. An den beiden Stirnseiten umfasst das Fluidgehäuse 3 jeweils eine Verschlussschraube 9, der den Innenraum 8 abdichtet. In dem Innenraum 8 befindet sich ein Fluid, insbesondere Hydrauliköl.

Wie Fig. 2 verdeutlicht, befinden sich im Innenraum 8 ein Schließkolben 12 und eine Schließfeder 13. Der Schließkolben 12 stützt sich mit einer entsprechenden Rolle auf einen Nocken 14 der Abtriebswelle 10. Auf der gegenüberliegenden Seite des Schließkolbens 12 greift die Schließfeder 13 an. Durch manuelles Öffnen der Tür wird die Abtriebswelle 10 in Rotation versetzt. Dadurch dreht sich der Nocken 14 und der Schließkolben 12 wird nach rechts (entsprechend der Darstellung in Fig. 2) bewegt. Dadurch wird die Schließfeder 13 gespannt. Beim Schließen der Tür entspannt sich die Schließfeder 13, der Schließkolben 12 wird nach links bewegt, wodurch die Abtriebswelle 10 wieder in Rotation versetzt wird. Um diese Schließbewegung zu dämpfen, ist im Innenraum 8 der Dämpfungskolben 15 angeordnet, der ebenfalls über eine entsprechende Rolle mit dem Nocken 14 in Kontakt steht. Die dem Dämpfungskolben 15 zugewandte Stirnseite ist über den in Figuren 2 und 3 gezeigte Verschlussschraube 9 verschlossen. In dieser Verschlussschraube 9 ist eine Fluidgehäuseöffnung 20 ausgebildet. In dieser Fluidgehäuseöffnung 20 befindet sich ein Ventil 21, das thermisch aktivierbar ist.

Im Detail zeigt Fig. 3, dass das Ventil 21 einen Ventilkörper 22 aufweist, der in der Fluidgehäuseöffnung 20 dichtend sitzt. Außenseitig ist in die Fluidgehäuseöffnung 20 eine Ventilverschlussschraube 24 eingeschraubt. Zwischen dem Ventilkörper 22 und der Ventilverschlussschraube 24 befindet sich ein Auslöseelement 23, das in seinem intakten Zustand den Ventilkörper 22 im Ventilsitz hält.

Im gezeigten Ausführungsbeispiel ist das Auslöseelement 23 als Thermo-Glasampulle ausgebildet. Diese Thermo-Glasampulle wird bei entsprechender thermischer Einwirkung zerstört. Dadurch kann sich durch einen entsprechend hohen Innendruck im Innenraum 8 der Ventilkörper 22 aus seinem Ventilsitz lösen.

Die Ventilverschlussschraube 24 weist mehrere Löcher 25 auf, durch die das Fluid nach außen spritzen kann.

Außerhalb des Fluidgehäuses 3, an der Stirnseite mit der Fluidgehäuseöffnung 22 befindet sich eine Auffangvorrichtung 30. Die Auffangvorrichtung 30 ist in diesem Ausführungsbeispiel durch ein Plattenbauteil 31 und ein Auffanggehäusebauteil 32 gebildet. Das Auffanggehäusebauteil 32 ist gleichzeitig eine der beiden Endkappen 7 der Verkleidung 5.

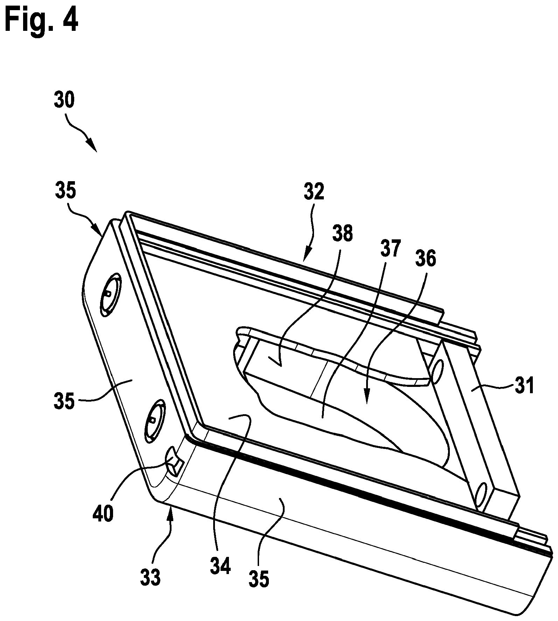

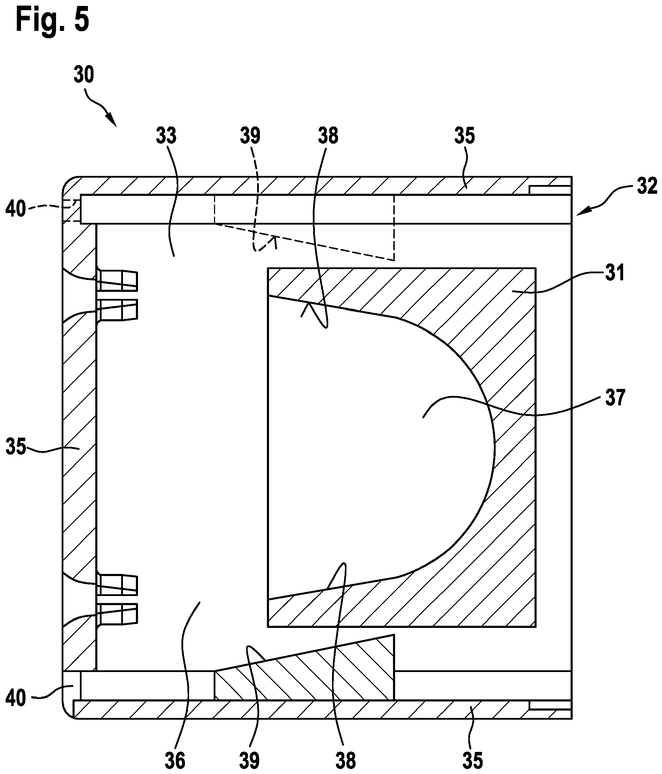

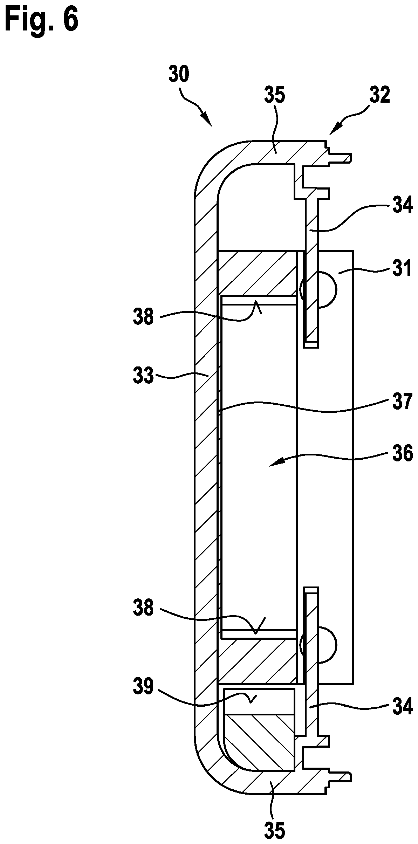

In Fig. 3 ist das Auffanggehäusebauteil 32 fast vollständig ausgeblendet. Lediglich ein keilförmiger Einsatz, der eine Zusatz-Ableitfläche 39 bildet, ist hier dargestellt. Die Fig. 4 zeigt die vollständige Auffangvorrichtung 30. Die Figuren 5 und 6 zeigen zwei Schnittansichten durch diese Auffangvorrichtung 30.

Das Auffanggehäusebauteil 32 weist eine Außenwand 33 und eine gegenüberliegende Innenwand 34 auf. Außenwand 33 und Innenwand 34 sind voneinander beabstandet und an drei Seiten über Seitenwände 35 verbunden. Von außen sichtbare Bestandteile der Endkappe 7 bilden die Außenwand 33 und die drei Seitenwände 35. Zur Montageseite 2 hin ist das Auffanggehäusebauteil 32 offen, so dass es auf das Plattenbauteil 31 aufschiebbar ist. Die Innenwand 34 ist offen, so dass das Fluid in die Auffangvorrichtung 30 einspritzen kann.

Das Plattenbauteil 31 ist im gezeigten Ausführungsbeispiel an der Montageplatte 4 befestigbar, insbesondere anschraubbar.

Die Auffangvorrichtung 30 bildet einen Auffangraum 36, in dem das aus der Fluidgehäuseöffnung 20 austretende Fluid aufgefangen wird. Dieser Auffangraum 36 ist durch eine Spritzwand 37 begrenzt. Die Spritzwand 37 ist eine vertikal stehende Wand, die hier durch das Plattenbauteil 31 gebildet ist. Beidseitig, also am oberen und unteren Ende der Spritzwand 37 ist je eine geneigte Ableitfläche 38 vorgesehen. Die geneigten Ableitflächen 38 sind durch das Plattenbauteil 31 gebildet. Je nach Montageausrichtung des Türbetätigers ist eine der beiden geneigten Ableitflächen 38 an der Oberseite und somit ungenutzt. Das Fluid läuft an der Spritzwand 37 nach unten auf die unter der Spritzwand 37 angeordnete geneigte Ableitfläche 38.

In dem Ausführungsbeispiel ist die Zusatz-Ableitfläche 39 vorgesehen, die durch ein entsprechend keilförmiges Teil gebildet ist, das in dem Auffanggehäusebauteil 32 angeordnet ist. Das Fluid fließt über die geneigte Ableitfläche 38 auf die Zusatz-Ableitfläche 39 und von dort zu einer Ableitöffnung 40.

Die Ableitöffnung 40 befindet sich, unabhängig von der sonstigen Ausgestaltung des Ausführungsbeispiels, an einer Seite der Auffangvorrichtung 30, die der Montageseite 2 abgewandt ist.

Ergänzend zu der gezeigten Darstellung ist auch bevorzugt vorgesehen, dass die Auffangvorrichtung 30, insbesondere das Auffanggehäusebauteil 32 zwei gegenüberliegende Ableitöffnungen 40 aufweist, wobei die obenliegende Ableitöffnung 40 dann ungenutzt bleibt. Ebenso ist es möglich, auch an beiden Seiten eine Zusatz-Ableitfläche 39 vorzusehen.

### Bezugszeichenliste

- 1: Türbetätiger
- 2: Montageseite
- 3: Fluidgehäuse
- 4: Montageplatte
- 5: Verkleidung
- 6: Hauptverkleidung
- 7: Endkappen
- 8: Innenraum
- 9: Verschlussschraube
- 10: Abtriebswelle
- 11: Anschlüsse
- 12: Schließkolben
- 13: Schließfeder
- 14: Nocken
- 15: Dämpfungskolben
- 16: Abtriebsachse
- 20: Fluidgehäuseöffnung
- 21: Ventil
- 22: Ventilkörper
- 23: Auslöseelement
- 24: Ventilverschlussschraube
- 25: Löcher
- 30: Auffangvorrichtung
- 31: Plattenbauteil
- 32: Auffanggehäusebauteil
- 33: Außenwand
- 34: Innenwand
- 35: Seitenwand
- 36: Auffangraum
- 37: Spritzwand
- 38: geneigte Ableitflächen
- 39: Zusatz-Ableitflächen
- 40: Ableitöffnung

## Patentansprüche

1. Türbetätiger (1) zum Öffnen und/oder Schließen einer Tür, umfassend
• ein Fluidgehäuse (3) mit einem Innenraum (8), der mit einem Fluid, insbesondere Hydrauliköl, gefüllt ist,
• eine Fluidgehäuseöffnung (20) im Fluidgehäuse (3) zum Ausleiten des Fluids bei thermischer Überbelastung,
• ein die Fluidgehäuseöffnung (20) verschließendes, zum Öffnen thermisch aktivierbares Ventil (21),
• und eine außerhalb des Fluidgehäuses (3), gegenüber der Fluidgehäuseöffnung (20) angeordnete Auffangvorrichtung (30), die einen zur (20) Fluidgehäuseöffnung hin offenen Auffangraum (36) für das Fluid bildet und zumindest eine Ableitöffnung (40) zum Ableiten des Fluids aus dem Auffangraum (36) aufweist.

2. Türbetätiger nach Anspruch 1, wobei die Auffangvorrichtung (30) eine Spritzwand (37) umfasst, die der Fluidgehäuseöffnung (20) gegenüberliegt und zum Auffangen des ausgeleiteten Fluids im Auffangraum (36) angeordnet ist.

3. Türbetätiger nach Anspruch 2, wobei die Auffangvorrichtung (30) am unteren Ende der Spritzwand (37) eine zur Ableitöffnung (40) geneigte Ableitfläche (38) für das Fluid umfasst.

4. Türbetätiger nach Anspruch 3, wobei die Auffangvorrichtung (30) zwei gegenüberliegende, geneigte Ableitflächen (38) für das Fluid umfasst, wobei je nach Montageausrichtung des Türbetätigers (1) eine der beiden Ableitflächen (38) am unteren Ende und die andere Ableitfläche (38) ungenutzt am oberen Ende der Spritzwand (37) liegt.

5. Türbetätiger nach einem der Ansprüche 3 oder 4, wobei die Auffangvorrichtung (30) zumindest eine geneigte Zusatz-Ableitfläche (39) für das Fluid umfasst, wobei die Zusatz-Ableitfläche (39) angeordnet ist, sodass das Fluid von der Spritzwand (37) über die geneigte Ableitfläche (38) auf die Zusatz-Ableitfläche (39) und von der Zusatz-Ableitfläche (39) zur Ableitöffnung (40) fließt.

6. Türbetätiger nach einem der vorhergehenden Ansprüche, wobei die zumindest eine Ableitöffnung (40) an einer der Montageseite (2) des Türbetätigers (1) abgewandten Seite der Auffangvorrichtung (30) angeordnet ist.

7. Türbetätiger nach einem der vorhergehenden Ansprüche, wobei sich die zumindest eine Ableitöffnung (40) unmittelbar in die Umgebung öffnet.

8. Türbetätiger nach einem der vorhergehenden Ansprüche, wobei die Auffangvorrichtung (30) zumindest zwei gegenüberliegende Ableitöffnungen (40) für das Fluid umfasst, wobei je nach Montageausrichtung des Türbetätigers (1) eine der beiden Ableitöffnungen (40) am unteren Rand und die andere Ableitöffnung (40) ungenutzt am oberen Rand der Auffangvorrichtung (30) liegt.

9. Türbetätiger nach einem der vorhergehenden Ansprüche, wobei die Auffangvorrichtung (30) ein Plattenbauteil (31) umfasst, wobei das Plattenbauteil (31) die Spritzwand (37) bildet und am Fluidgehäuse (3) oder einer Montageplatte (4) angeordnet ist.

10. Türbetätiger nach einem der vorhergehenden Ansprüche, wobei die Auffangvorrichtung (30) ein Auffanggehäusebauteil (32) umfasst, wobei das Auffanggehäusebauteil (32) die zumindest eine Ableitöffnung (40) aufweist, wobei vorzugsweise das Auffanggehäusebauteil (32) am Plattenbauteil (31) und/oder an der Verschlussschraube (9) montierbar, insbesondere aufsteckbar ist.

11. Türbetätiger nach einem der vorhergehenden Ansprüche, umfassend eine das Fluidgehäuse (3) des Türbetätigers (1) abdeckende Verkleidung (5), wobei zumindest ein Bereich der Auffangvorrichtung (30), insbesondere das Auffanggehäusebauteil (32), durch eine stirnseitige Endkappe (7) der Verkleidung (5) gebildet ist.

12. Türbetätiger nach einem der vorhergehenden Ansprüche, wobei das Auffanggehäusebauteil (32) einstückig mit dem Plattenbauteil (31) ausgebildet ist, wobei vorzugsweise das Auffanggehäusebauteil (32) an der Verschlussschraube (9) montierbar, insbesondere aufsteckbar ist.

13. Türbetätiger nach einem der vorhergehenden Ansprüche, wobei das Ventil (21) ein Auslöseelement (23) umfasst, dass zum Öffnen des Ventils (21) durch thermische Einwirkung zerstörbar und/oder deformierbar und/oder schmelzbar ist.

14. Türbetätiger nach Anspruch 12, wobei das Ventil (21) einen Ventilkörper (22) in der Fluidgehäuseöffnung (20) und eine in die Fluidgehäuseöffnung (20) eingeschraubte Ventilverschlussschraube (24) umfasst, wobei das Auslöseelement (23) zwischen dem Ventilkörper (22) und der Ventilverschlussschraube (24) eingeklemmt ist.

15. Türbetätiger nach Anspruch 13, wobei die Ventilverschlussschraube (24) fluiddurchlässig ist.

## Claims

1. A door actuator (1) for opening and/or closing a door, comprising
• a fluid housing (3) with an inner compartment (8) which is filled with a fluid, in particular hydraulic oil,
• a fluid housing opening (20) in the fluid housing (3) for draining the fluid in the event of thermal overload,
• a valve (21) which closes the fluid housing opening (20) and can be thermally activated for opening,
• and a collecting device (30) which is arranged outside of the fluid housing (3), opposite the fluid housing opening (20), and which forms a collecting space (36) for the fluid open towards the (20) fluid housing opening and has at least one drain opening (40) for draining the fluid from the collecting space (36).

2. The door actuator according to claim 1, wherein the collecting device (30) comprises a splash wall (37) which is opposite the fluid housing opening (20) and which is arranged in the collecting space (36) for collecting the drained fluid.

3. The door actuator according to claim 2, wherein the collecting device (30) at the lower end of the splash wall (37) comprises a drain surface (38) for the fluid which is inclined towards the drain opening (40).

4. The door actuator according to claim 3, wherein the collecting device (30) comprises two opposite inclined drain surfaces (38) for the fluid, wherein, depending on the mounting orientation of the door actuator (1), one of the two drain surfaces (38) is located at the lower end and the other drain surface (38) is located unused at the upper end of the splash wall (37).

5. The door actuator according to one of claims 3 or 4, wherein the collecting device (30) comprises at least one inclined additional drain surface (39) for the fluid, wherein the additional drain surface (39) is arranged such that the fluid from the splash wall (37) flows over the inclined drain surface (38) onto the additional drain surface (39) and from the additional drain surface (39) to the drain opening (40).

6. The door actuator according to one of the preceding claims, wherein the at least one drain opening (40) is arranged on a side of the collecting device (30) facing away from the mounting side (2) of the door actuator (1).

7. The door actuator according to one of the preceding claims, wherein the at least one drain opening (40) opens directly into the environment.

8. The door actuator according to one of the preceding claims, wherein the collecting device (30) comprises at least two opposite drain openings (40) for the fluid, wherein, depending on the mounting orientation of the door actuator (1), one of the two drain openings (40) is located at the lower edge and the other drain opening (40) is located unused at the upper edge of the collecting device (30).

9. The door actuator according to one of the preceding claims, wherein the collecting device (30) comprises a plate component (31), wherein the plate component (31) forms the splash wall (37) and is arranged on the fluid housing (3) or a mounting plate (4).

10. The door actuator according to one of the preceding claims, wherein the collecting device (30) comprises a collecting housing component (32), wherein the collecting housing component (32) has the at least one drain opening (40), wherein the collecting housing component (32) can preferably be mounted, in particular fitted, onto the plate component (31) and/or the cover screw (9).

11. The door actuator according to one of the preceding claims, comprising a casing (5) covering the fluid housing (3) of the door actuator (1), wherein at least one region of the collecting device (30), in particular the collecting housing component (32), is formed by a front-sided end cap (7) of the casing (5).

12. The door actuator according to one of the preceding claims, wherein the collecting housing component (32) is designed integrally with the plate component (31), wherein the collecting housing component (32) can preferably be mounted, in particular fitted, onto the cover screw (9).

13. The door actuator according to one of the preceding claims, wherein the valve (21) comprises a trigger element (23) that can be destroyed and/or deformed and/or melted by thermal action in order to open the valve (21).

14. The door actuator according to claim 12, wherein the valve (21) comprises a valve body (22) in the fluid housing opening (20) and a valve cover screw (24) screwed into the fluid housing opening (20), wherein the trigger element (23) is clamped between the valve body (22) and the valve cover screw (24).

15. The door actuator according to claim 13, wherein the valve cover screw (24) is fluid-permeable.

## Revendications

1. Commande de porte (1) pour ouvrir et/ou fermer une porte, comprenant
• un carter de fluide (3) avec un espace intérieur (8), qui est rempli avec un fluide, en particulier de l'huile hydraulique,
• une ouverture de carter de fluide (20) dans le carter de fluide (3) pour extraire le fluide en cas de surcharge thermique,
• une soupape à activation thermique (20) pour l'ouverture fermant l'ouverture de carter de fluide (21),
• et un dispositif collecteur (30) agencé à l'extérieur du carter de fluide (3), qui forme un espace de collecte (36) pour le fluide qui est ouvert vers (20) l'ouverture de carter de fluide et présente au moins une ouverture d'évacuation (40) pour évacuer le fluide de l'espace de collecte (36).

2. Commande de porte selon la revendication 1, dans laquelle le dispositif collecteur (30) comprend une cloison (37), qui est opposé à l'ouverture de carter de fluide (20) et est agencé dans l'espace de collecte (36) pour collecter le fluide extrait.

3. Commande de porte selon la revendication 2, dans laquelle le dispositif collecteur (30) à l'extrémité inférieure de la cloison (37) comprend une surface d'évacuation (38) pour le fluide qui est inclinée vers l'ouverture d'évacuation (40).

4. Commande de porte selon la revendication 3, dans lequel le dispositif de collecte (30) comprend deux surfaces inclinées de déviation (38) opposées pour le fluide, dans laquelle, selon l'orientation de montage de la commande de porte (1), l'une des deux surfaces de déviation (38) se trouve à l'extrémité inférieure et l'autre surface de déviation (38) se trouve inutilisée à l'extrémité supérieure de la cloison (37).

5. Commande de porte selon l'une des revendications 3 ou 4, dans laquelle le dispositif collecteur (30) comprend au moins une surface inclinée de déviation supplémentaire (39) pour le fluide, dans laquelle la surface de déviation supplémentaire (39) est agencée, de sorte que le fluide s'écoule de la cloison (37) par le biais de la surface de déviation inclinée (38) sur la surface de déviation supplémentaire (39) et de la surface de déviation supplémentaire (39) vers l'ouverture d'évacuation (40).

6. Commande de porte selon l'une quelconque des revendications précédentes, dans laquelle la au moins une ouverture d'évacuation (40) est agencée sur un côté du dispositif collecteur (30) tourné à l'opposé du côté de montage (2) de la commande de porte (1).

7. Commande de porte selon l'une quelconque des revendications précédentes, dans laquelle la au moins une ouverture d'évacuation (40) s'ouvre directement dans l'environnement.

8. Commande de porte selon l'une quelconque des revendications précédentes, dans laquelle le dispositif collecteur (30) comprend au moins deux ouvertures d'évacuation opposées (40) pour le fluide, dans laquelle, selon l'orientation de montage de la commande de porte (1), l'une des deux ouvertures d'évacuation (40) se trouve sur le bord inférieur et l'autre ouverture de drainage (40) se trouve inutilisée sur le bord supérieur du dispositif collecteur (30).

9. Commande de porte selon l'une quelconque des revendications précédentes, dans laquelle le dispositif collecteur (30) comprend un composant de plaque (31), dans laquelle le composant de plaque (31) forme la cloison (37) et est agencé sur le carter de fluide (3) ou une plaque de montage (4).

10. Commande de porte selon l'une quelconque des revendications précédentes, dans laquelle le dispositif collecteur (30) comprend un composant de carter de collecte (32), dans laquelle le composant de carter de collecte (32) présente la au moins une ouverture d'évacuation (40), dans laquelle le composant de carter de collecte (32) peut de préférence être monté sur le composant de plaque (31) et/ou sur le bouchon fileté (9), en particulier peut être appliqué sur celui-ci.

11. Commande de porte selon l'une quelconque des revendications précédentes, comprenant un revêtement (5) recouvrant le carter de fluide (3) de la commande de porte (1), dans laquelle au moins une zone du dispositif collecteur (30), en particulier le composant de carter de collecte (32), est formé par un embout avant (7) du revêtement (5).

12. Commande de porte selon l'une quelconque des revendications précédentes, dans laquelle le composant de carter de collecte (32) est formé d'une seule pièce avec le composant de plaque (31), dans laquelle de préférence le composant de carter de collecte (32) peut être monté sur le bouchon fileté (9), en particulier peut être appliqué sur celui-ci.

13. Commande de porte selon l'une quelconque des revendications précédentes, dans laquelle la soupape (21) comprend un élément déclencheur (23) qui peut être détruit et/ou déformé et/ou fondu par action thermique afin d'ouvrir la soupape (21).

14. Commande de porte selon la revendication 12, dans laquelle la soupape (21) comprend un corps de soupape (22) dans l'ouverture de carter de fluide (20) et un bouchon fileté de soupape (24) vissée dans l'ouverture de carter de fluide (20), dans laquelle l'élément déclencheur (23) est serré entre le corps de soupape (22) et le bouchon fileté de soupape (24).

15. Commande de porte selon la revendication 13, dans laquelle le bouchon fileté de soupape (24) est perméable aux fluides.
